# EUROPEAN PATENT SPECIFICATION

(11) **EP 2 248 624 B1**
(45) Date of publication and mention of the grant of the patent: **01.01.2014**
(21) Application number: 10161570.6
(22) Date of filing: 30.04.2010
(51) Int. Cl.: B23K 15/00, B23K 26/26, B23K 26/20, B23K 26/32, F16B 5/08

(54) **Method of beam welding two members using vented shims ; corresponding beam welder and vented shims**
Verfahren zum Strahlschweißen unter Verwendung belüfteter Zwischenlagen ; entsprechende Strahlschweißer und belüftete Zwischenlagen
Procédé de soudure par faisceau utilisant des câles ventilées ; appareil de soudage utilisant un faisceau et câles ventilées correspondants

(30) Priority: 05.05.2009 US 435430
(43) Date of publication of application: 10.11.2010
(73) Proprietor: General Electric Company, Schenectady, NY 12345 (US)
(72) Inventor: Nowak, Daniel Anthony, Greenville, SC 29607 (US); Szabo, Attila, Greenville, SC 29607 (US)
(74) Representative: Cleary, Fidelma

(56) References cited:
- EP-A2- 2 127 795
- JP-A- 10 277 638
- JP-A- 11 019 791
- US-A- 6 060 682
- US-A1- 2007 017 906
- US-A1- 2008 164 301

## Description

The subject matter disclosed herein relates generally to welding and more specifically to a vented shim beam welding process. A method of and a welding system for welding two members of a metallic material are defined in the preamble of claims 1 and 11 respectively (see, for Example, US 2008/164 301). A weld containing porosity may be formed when materials are beam welded together and there is no mechanism for gases that are created during the welding process to escape from the weld pool. The formation of a weld containing porosity may be more likely to be formed when thick pieces of materials are joined. The thicker a piece of material, the greater likelihood that during welding that there will be the formation of gases that evolved during the welding process that are unable to escape and thus result in the formation of a weld containing porosity.

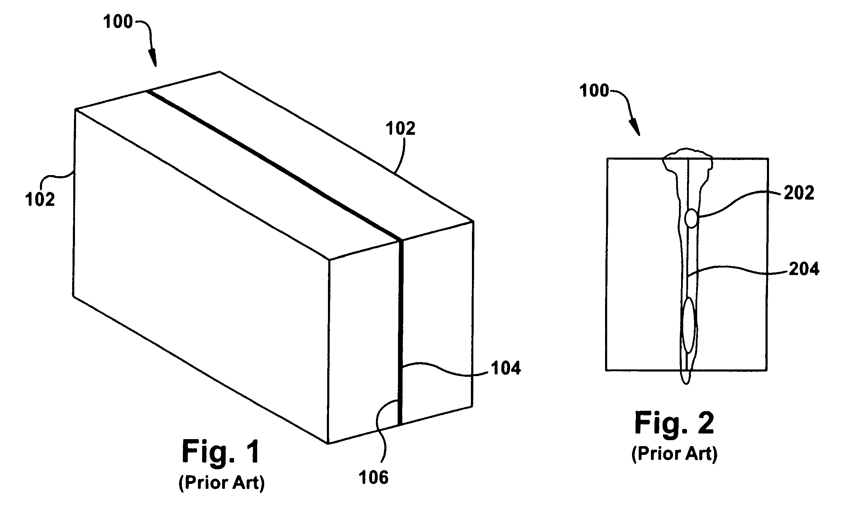

FIG. 1 shows an illustrative prior art approach to welding two material members 102 together using a shim 104. FIG. 1 shows how shim 104 is placed along a weld joint faying surface 106 between the two material members 102. FIG. 2 shows the prior art including a cross-sectional view of a weld 204 containing porosity 202.

European Patent Application No. 2127795 describes a welding process to join two pieces of metal at right angles to each other to form a T-shaped component, the first piece has detents. The first component is a stringer and the second component is a sheet aluminium web plate. The stinger is located against the web plate by tack welding.

United States Patent Application No. 2008/164301 describes a method of welding superalloy components comprising pre-heating one or more components to be welded to a temperature of at least 1500 degrees F. in a substantially enclosed inert gas atmosphere; supplying multiple fillers to the weld zone, at least two of said fillers having different compositions; and welding the one or more preheated components utilizing a laser beam, while maintaining said pre-heat temperature.

United States Patent No. 6060682 describes a method of producing a welded joint between a pair of components each having respective edges extending along said joint, said components having dissimilar thicknesses at said respective edges, said method comprising the steps of forming an undercut on an edge of at least one of said components, placing an edge of the other of said components adjacent said undercut so that one surface of one of said components is offset in the direction of said edges from the adjacent surface of the other of said components and a portion of said one edge overpass said other component in a direction transverse to said edges to provide an overhang, applying a laser beam to said overhang to cause melting thereof and provide molten material to said joint, and subsequently cooling said edges to join said edges to one another

### BRIEF DESCRIPTION OF THE INVENTION

The present invention resides in a method for beam welding two members made of a metallic material as defined in claim 1, and in a welding system for welding two members of metallic material, as defined in claim 11.

### BRIEF DESCRIPTION OF THE DRAWINGS

There follows a detailed description of embodiments of the invention by way of example only with reference to the accompanying drawings, in which:
FIG. 1 shows a perspective view of two members made of a metallic material with a shim therebetween according to the prior art.
FIG. 2 shows a cross-sectional view of the members of FIG. 1 illustrating the joint formed between the members and the porosity entrapped in the weld metal.
FIG. 3 shows a perspective view of a member made of a metallic material with shims that include vent paths between the shims.
FIG. 4 shows a cross-sectional view of a porosity free joint formed using the shims of FIG. 3.
FIG. 5 shows a cross-sectional view of two members made of a metallic material being beam welded with one of the members in phantom to expose the weld progression.

It is noted that the drawings are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

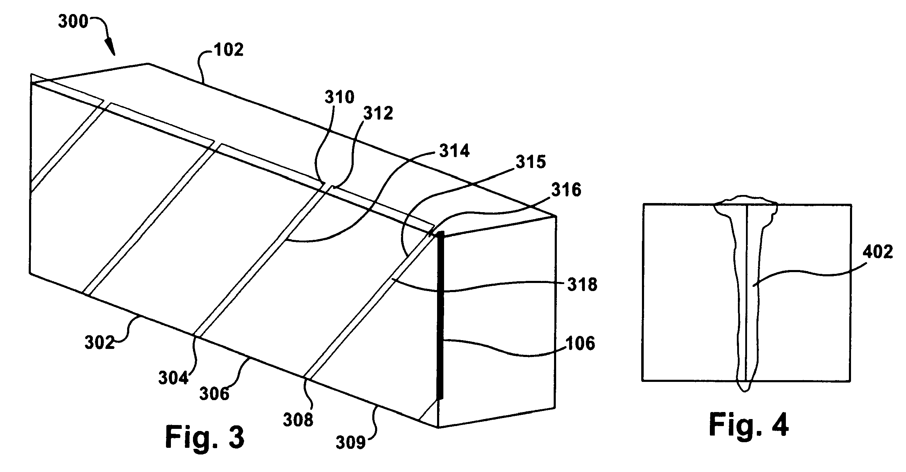

The removal of gases created during the welding of metallic materials is advantageous to the welding process as it reduces the possible formation of porosity in the weld. One way to remove these gases is through a vent path that is created using shims. The shims may already be present as part of the welding process. The shims may be arranged to create a vent path for the removal of gases created during welding. Turning to the drawings, FIG. 3 shows an embodiment of the invention wherein there is a metallic material member 102 that includes a welding joint faying surface 106, and a first metallic shim 302 adjacent to a second metallic shim 306 with a first vent path 304 therebetween. Gases created during the welding process may be removed from the metallic material member 102 ahead of the weld pool through vent path 304.

In one embodiment, there is a welding shim system for welding two members 102 of metallic material. The system may comprise first metallic shim 302 having an angled edge 310 for placement within a plane of weld joint faying surface 106 between the two members 102 of the metallic material, a second metallic shim 306 having a complementary angled edge 312 to angled edge 310 of first metallic shim 302 for placement within the plane of the weld joint faying surface 106 between the two members 102 of the metallic material. According to the present invention, the system has an element 314 on at least one of first metallic shim 302 or second metallic shim 306 for positioning the shims such that first vent path 304 exists between angled edge 310 and complimentary angled edge 312. In an additional embodiment, first shim 302 and second shim 306 each include a metallic material. The material of the shim, the angle cut on the shim, and the gap spacing of the shim are correlated to the welding parameters and the metallic material being joined. The welding parameters may include, as an example, controlling the power to the electron beam, current to the electron beam, travel speed of the beam, oscillation, frequency and focus. In an alternative embodiment, each metallic shim has a substantially parallelogram shape. According to the present invention, angle edge 310 and complimentary angle edge 312 are approximately 20 to 60 degrees relative to a beam welding angle.

In a further embodiment, a third metallic shim 309 or any number of additional shims may be provided having a second complementary angled edge 316 to a second angle edge 315 of an adjacent second shim 306 (in this case, second metallic shim) for placement within the plane of the weld joint faying surface 106 between the two members 102 of the metallic material. An element 318 may be provided on at least one of second shim 306 or third shim 309 for positioning the shims such that a second vent path 308 exists between second complimentary angled edge 318 and second angled edge 315.

First vent path 304 and second vent path 308 allow gases created during the welding process to escape ahead of the weld pool. In one embodiment, the first shim and the second shim may be separated from one another by a space of up to 0.100 inch. As welding progresses along metallic material member 102, gases created during the welding process may be channeled through vent paths 304, 308 ahead of the weld pool. Allowing the gases to escape during the welding process may reduce or eliminate the creation of a weld containing porosity 202 (FIG. 2). Consequently, allowing the gases from the welding process to be channeled away through vent paths 304, 308 may result in a porosity free weld, as illustrated in FIG. 4. A porosity free weld 402 is a preferred weld between two or more metallic materials.

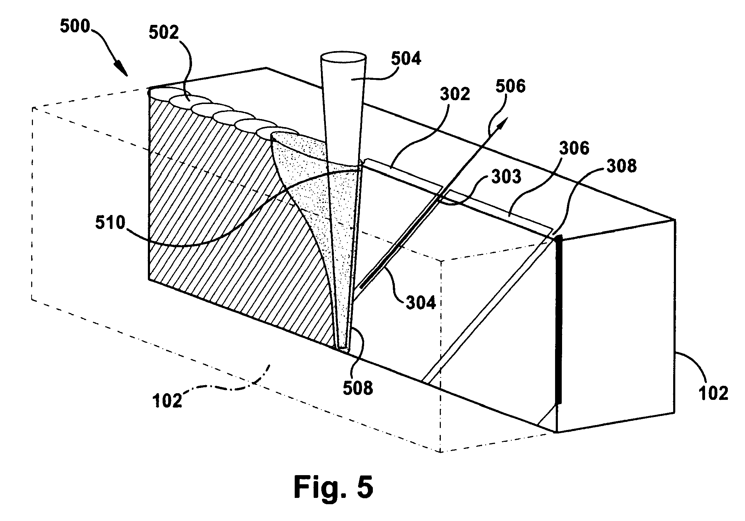

Turning to FIG. 5, a beam welder 504 welds two metallic material members 102 using shims 302, 306 that have vent path 304 between adjacent shims 302, 306 is illustrated. As beam welder 504 progresses along metallic material member 102, it produces a porosity free weld 502. As beam welder 504 progresses along metallic material member 102, a weld front 508 contacts second shim 306 and second vent path 308 before reaching an end 303 of the first vent path 304. That is, first vent path 304 terminates sufficiently close enough to second vent path 308 such that a vent path is always available. This process ensures that at every stage, welding gases 506 produced by the welding process are able to be channeled out ahead of the weld pool 510. By aligning the shims 302, 306 along weld joint faying surface 106 so there is always vent path 304, 308 for the escape of gases 506 from beam welder 504, shims 302, 306 reduce the possibility of creating a weld with porosity 202 (FIG. 2) and increases the likelihood of producing a porosity free weld 402 (FIG. 4). The weld of metallic material members 102 and shim 104 can be made using a beam weld 504. In one embodiment, the beam weld 504 can be an electron beam. In an alternative embodiment, the beam weld 504 can be a laser beam.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to an individual in the art are included within the scope of the invention as defined by the accompanying claims.

## Claims

1. A method of beam welding two members (102) made of a metallic material, the method comprising:
placing a first shim (302) having angled edge (310) along a weld joint faying surface (106) between the two members (102) of the metallic material;
placing a second shim (306) having a complementary angled edge (312) to the angle edge (310) of the first shim (302) along the weld joint faying surface (106) between the two members (102) of the metallic material and at a distance from the first shim (302) to create a first vent path (304) between the first and the second shim (306); and,
the beam oriented with respect to the members by a beam welding angle, beam welding the members (102) of the metallic material with the shims (302, 306) to create a porosity free weld (402, 502), **characterized in that** the angled edge (310) and the complementary angled edge (312) are approximately 20 to 60 degrees relative to the beam welding angle.

2. The method of claim 1, wherein the first and the second shim (302, 306) each include a metallic material.

3. The method of claim 1 or 2, further comprising placing a third shim (309) along the weld joint faying surface (106) and at a distance from the second shim (306) to create a second vent path (308) between the second and the third shim (306, 309).

4. The method of claim 3, further comprising aligning the first vent path (304) with the weld joint faying surface (106) such that as the first vent path (304) is consumed by a weld pool (510), the second vent path (308) is available to provide a channel for gases (506) from the welding to escape ahead of the weld pool (510).

5. The method of any of the preceding claims, wherein the first shim (302) and the second shim (306) are separated from one another by a space of up to 2.54 mm (0.100 inch).

6. The method of any of the preceding claims, wherein the beam welding includes controlling power to a beam welder (504) based on the metallic material being joined.

7. The method of any of the preceding claims, wherein the beam welding includes controlling current to a beam welder (504) based on the metallic material being joined.

8. The method of any of the preceding claims, wherein the beam welding includes controlling a travel speed of a beam welder (504) based on the metallic material being joined.

9. The method of any of the preceding claims, wherein the beam welding includes using electron beam welding.

10. The method of any of the preceding claims, wherein the beam welding includes using laser beam welding.

11. A welding system for welding two members (102) of a metallic material, the system comprising:
a beam welder (504) arranged to weld the two members (102) at a predetermined beam welding angle;
a first shim (302) having an angled edge (310) for placement within a plane of a weld joint faying surface (106) between the two members (102) of the metallic material;
a second shim (306) having a complementary angled edge (312) to the angled edge (310) of the first shim (302) for placement within the plane of the weld joint faying surface (106) between the two members (102) of the metallic material, **characterized in that** the angle edge (310) and the complementary angle edge (312) is, during welding approximately 20 to 60 degrees relative to the beam welding angle and of the beam welder (504) and further **characterized by**
an element (314, 318) on at least one of the first and second shims (302, 306) for positioning the shims (302, 306) such that a first vent path (304) exists between the angled edge (310) and the complimentary angled edge (312).

12. The system of claim 11, wherein the first and the second shim (302, 306) each include a metallic material.

13. The system of claim 11 or 12; further comprising a third shim (309) having a second complementary angled edge (316, 318) to a second angle edge (315) of the second shim (306) for placement within the plane of the weld joint faying surface (106) between the two members (102) of the metallic material.

14. The system of claim 13, further comprising an element (318) on at least one of the second and third shim (302, 306) for positioning the shims (302, 306) such that a second vent path (308) exists between the second complimentary angled edge (316, 318) and the second angled edge (310).

## Patentansprüche

1. Verfahren zum Strahlschweißen von zwei Bauteilen (102), die aus einem metallischen Material bestehen, wobei das Verfahren umfasst:
Anbringen einer ersten Scheibe (302), die eine abgewinkelte Kante (310) entlang einer Schweißverbindungsstoßfläche (106) zwischen den zwei Bauteilen (102) aus dem metallischen Material aufweist;
Anbringen einer zweiten Scheibe (306), die eine zu der abgewinkelten Kante (310) der ersten Scheibe (302) komplementäre abgewinkelte Kante (312) entlang der Schweißverbindungsstoßfläche (106) zwischen den zwei Bauteilen (102) aus dem metallischen Material und bei einem Abstand von der ersten Scheibe (302) aufweist, um einen ersten Abzugsweg (304) zwischen der ersten und der zweiten Scheibe (306) zu erzeugen; und
Strahlschweißen der Bauteile (102) aus dem metallischen Material, wobei der Strahl bezüglich der Bauteile durch einen Strahlschweißwinkel ausgerichtet ist, mit den Scheiben (302, 306), um eine porenfreie Schweißnaht (402, 502) zu erzeugen, **dadurch gekennzeichnet, dass** die abgewinkelte Kante (310) und die komplementäre abgewinkelte Kante (312) ungefähr 20 bis 60 Grad mit Bezug auf den Strahlschweißwinkel aufweisen.

2. Verfahren nach Anspruch 1, wobei die erste und die zweite Scheibe (302, 306) jeweils ein metallisches Material enthalten.

3. Verfahren nach Anspruch 1 oder 2, ferner das Anbringen einer dritten Scheibe (309) entlang der Schweißverbindungsstoßfläche (106) und bei einem Abstand von der zweiten Scheibe (306) umfassend, um einen zweiten Abzugsweg (308) zwischen der zweiten und der dritten Scheibe (306, 309) zu erzeugen.

4. Verfahren nach Anspruch 3, ferner das Ausrichten des ersten Abzugsweges (304) mit der Schweißverbindungsstoßfläche (106) derart umfassend, dass der erste Abzugsweg (304) durch ein Schweißbad (510) eingenommen wird, wobei der zweite Abzugsweg (308) zur Verfügung steht, um einen Kanal bereitzustellen, dass Gase (506) aus der Schweißung über dem Schweißbad (510) entweichen.

5. Verfahren nach einem der vorhergehenden Ansprüche, wobei die erste Scheibe (302) und die zweite Scheibe (306) voneinander durch einen Abstand von bis zu 2,54 mm (0,100 Zoll) getrennt sind.

6. Verfahren nach einem der vorhergehenden Ansprüche, wobei das Strahlschweißen eine Leistungsregelung in einem Strahlschweißgerät (504) auf der Basis des zu verbindenden metallischen Materials umfasst.

7. Verfahren nach einem der vorhergehenden Ansprüche, wobei das Strahlschweißen eine Stromregelung in einem Strahlschweißgerät (504) auf der Basis des zu verbindenden metallischen Materials umfasst.

8. Verfahren nach einem der vorhergehenden Ansprüche, wobei das Strahlschweißen eine Regelung der Vorschubgeschwindigkeit eines Strahlschweißgeräts (504) auf der Basis des zu verbindenden metallischen Materials umfasst.

9. Verfahren nach einem der vorhergehenden Ansprüche, wobei das Strahlschweißen eine Verwendung des Elektronenstrahlschweißens einschließt.

10. Verfahren nach einem der vorhergehenden Ansprüche, wobei das Strahlschweißen eine Verwendung des Laserstrahlschweißens einschließt.

11. Schweißanlage zum Verschweißen von zwei Bauteilen (102) aus einem metallischen Material, wobei die Anlage umfasst:
ein Strahlschweißgerät (504), das eingerichtet ist, zwei Bauteile (102) bei einem vorgegebenen Strahlschweißwinkel zu verschweißen;
eine erste Scheibe (302), die eine abgewinkelte Kante (310) aufweist, zum Anbringen in einer Ebene einer Schweißverbindungsstoßfläche (106) zwischen den zwei Bauteilen (102) aus dem metallischen Material;
eine zweite Scheibe (306), die eine zu der abgewinkelten Kante (310) der ersten Scheibe (302) komplementäre abgewinkelte Kante (312) zum Anbringen in der Ebene der Schweißverbindungsstoßfläche (106) zwischen den zwei Bauteilen (102) aus dem metallischen Material aufweist, **dadurch gekennzeichnet, dass** die abgewinkelte Kante (310) und die komplementäre abgewinkelte Kante (312) während des Schweißens ungefähr 20 bis 60 Grad mit Bezug auf den Strahlschweißwinkel und vom Strahlschweißgerät (504) aufweisen, und ferner **gekennzeichnet durch**
ein Element (314, 318) auf mindestens einer von der ersten und der zweiten Scheibe (302, 306), um die Scheiben (302, 306) derart zu positionieren, dass ein erster Abzugsweg (304) zwischen der abgewinkelten Kante (310) und der komplementären abgewinkelten Kante (312) vorhanden ist.

12. Anlage nach Anspruch 11, wobei die erste und die zweite Scheibe (302, 306) jeweils ein metallisches Material enthalten.

13. Anlage nach Anspruch 11 oder 12, ferner eine dritte Scheibe (309) umfassend, die eine zweite komplementäre abgewinkelte Kante (316, 318) zu einer zweiten abgewinkelten Kante (315) der zweiten Scheibe (306) aufweist, um in der Ebene der Schweißverbindungsstoßfläche (106) zwischen den zwei Bauteilen (102) aus dem metallischen Material angeordnet zu werden.

14. Anlage nach Anspruch 13, ferner mit einem Element (318) auf mindestens einer von der zweiten und dritten Scheibe (302, 306), um die Scheiben (302, 306) derart zu positionieren, dass ein zweiter Abzugsweg (308) zwischen der zweiten komplementären abgewinkelten Kante (316, 318) und der zweiten abgewinkelten Kante (310) vorhanden ist.

## Revendications

1. Procédé de soudage par faisceau de deux éléments (102) constitués d'un matériau métallique, le procédé comprenant les étapes consistant à :
placer une première cale (302) ayant un bord angulaire (310) le long d'une surface (106) affleurant le joint de soudage entre les deux éléments (102) du matériau métallique ;
placer une deuxième cale (306) ayant un bord angulaire (312) complémentaire du bord angulaire (310) de la première cale (302) le long de la surface (106) affleurant le joint de soudage entre les deux éléments (102) du matériau métallique et à une distance de la première cale (302) pour créer un premier trajet d'évent (304) entre la première et la seconde cale (306) ; et,
le faisceau étant orienté par rapport aux éléments par un angle de soudage par faisceau, souder par faisceau les éléments (102) du matériau métallique avec les cales (302, 306) pour créer une soudure sans porosité (402, 502), **caractérisé en ce que** le bord angulaire (310) et le bord angulaire complémentaire (312) font un angle d'environ 20 à 60 degrés par rapport à l'angle de soudage par faisceau.

2. Procédé selon la revendication 1, dans lequel la première et la seconde cale (302, 306) comprennent chacune un matériau métallique.

3. Procédé selon la revendication 1 ou la revendication 2, comprenant en outre le placement d'une troisième cale (309) le long de la surface (106) affleurant le joint de soudage et à une distance de la deuxième cale (306) pour créer un second trajet d'évent (308) entre la deuxième et la troisième cale (306, 309).

4. Procédé selon la revendication 3, comprenant en outre l'alignement du premier trajet d'évent (304) avec la surface (106) affleurant le joint de soudage de sorte que, lorsque le premier trajet d'évent (304) est consommé par un bain de soudure (510), le second trajet d'évent (308) soit disponible pour fournir aux gaz (506) provenant du soudage un canal leur permettant de s'échapper devant le bain de soudage (510).

5. Procédé selon l'une quelconque des revendications précédentes, dans lequel la première cale (302) et la seconde cale (306) sont séparées l'une de l'autre par un espace mesurant jusqu'à 2,54 cm (0,100 pouce).

6. Procédé selon l'une quelconque des revendications précédentes, dans lequel le soudage par faisceau comprend la commande de la puissance envoyée à un appareil de soudage par faisceau (504) en fonction du matériau métallique en cours de jonction.

7. Procédé selon l'une quelconque des revendications précédentes, dans lequel le soudage par faisceau comprend une commande du courant envoyé à un appareil de soudage par faisceau (504) en fonction du matériau métallique en cours de jonction.

8. Procédé selon l'une quelconque des revendications précédentes, dans lequel le soudage par faisceau comprend une commande d'une vitesse de déplacement d'un appareil de soudage par faisceau (504) en fonction du matériau métallique en cours de jonction.

9. Procédé selon l'une quelconque des revendications précédentes, dans lequel le soudage par faisceau comprend l'utilisation d'un soudage par faisceau électronique.

10. Procédé selon l'une quelconque des revendications précédentes, dans lequel le soudage par faisceau comprend l'utilisation d'un soudage par faisceau laser.

11. Système de soudage pour le soudage de deux éléments (102) d'un matériau métallique, le système comprenant :
un appareil de soudage par faisceau (504) aménagé pour souder les deux éléments (102) selon un angle de soudage par faisceau prédéterminé ;
une première cale (302) ayant un bord angulaire (310) pour placement dans un plan d'une surface (106) affleurant le joint de soudage entre les deux éléments (102) du matériau métallique ;
une deuxième cale (306) ayant un bord angulaire (312) complémentaire du bord angulaire (310) de la première cale (302) pour un placement dans le plan de la surface (106) affleurant le joint de soudage entre les deux éléments (102) du matériau métallique, **caractérisé en ce que** le bord angulaire (310) et le bord angulaire complémentaire (312) font, au cours du soudage, un angle d'environ 20 à 60 degrés par rapport à l'angle de soudage par faisceau et à l'appareil de soudage par faisceau (504), et **caractérisé en outre par** :
un élément (314, 318) sur au moins l'une des première et deuxième cales (302, 306) pour positionner les cales (302, 306) de sorte qu'un premier trajet d'évent (304) existe entre le bord angulaire (310) et le bord angulaire complémentaire (312).

12. Système selon la revendication 11, dans lequel les première et deuxième cales (302, 306) comprennent chacune un matériau métallique.

13. Système selon la revendication 11 ou la revendication 12, comprenant par ailleurs une troisième cale (309) ayant un second bord angulaire (316, 318) complémentaire d'un second bord angulaire (315) de la deuxième cale (306) pour un placement dans le plan de la surface (106) affleurant le joint de soudage entre les deux éléments (102) du matériau métallique.

14. Système selon la revendication 13, comprenant en outre un élément (318) sur au moins l'une des deuxième et troisième cales (302, 306) pour positionner les cales (302, 306) de sorte qu'un second trajet d'évent (308) existe entre le second bord angulaire complémentaire (316, 318) et le second bord angulaire (310).
